# EUROPÄISCHE PATENTANMELDUNG

(11) **EP 0 624 760 A1**
(43) Veröffentlichungstag der Anmeldung: **17.11.1994**
(21) Anmeldenummer: 94810251.2
(22) Anmeldetag: 03.05.1994
(51) Int. Cl.: F24D 19/10

(54) **Verfahren zur Steuerung einer Heizungspumpe**

(30) Priorität: 11.05.1993 CH 1441/93
(71) Anmelder: Lachenmeier, Georg, CH-8055 Zürich (CH)
(72) Erfinder: Lachenmeier, Georg, CH-8055 Zürich (CH)
(74) Vertreter: Patentanwälte Breiter + Wiedmer AG

(57) **Zusammenfassung**

Bei einem Verfahren zur Regelung eines Heizungssystems mit einem Wärmeerzeuger (10) zum Aufheizen von Heizungswasser und einem eine Heizungspumpe (18) sowie ein Heizungsventil (20) aufweisenden Heizungswasser-Kreislauf (12,14) erfolgt die Umwälzung des Heizungswassers im Heizungswasser-Kreislauf (12,14) über die Steuerung der Leistung der Heizungspumpe (18). Hierbei wird die Leistung der Heizungspumpe (18) und damit die Durchflussmenge des Heizungswassers im Heizungswasser-Kreislauf (12,14) über die Temperaturdifferenz zwischen der Vorlauftemperatur (T_{V}) und der Rücklauftemperatur (T_{R}) des Heizungswasser-Kreislaufs (12, 14) gesteuert.

Ein Heizungssystem mit einer Regelung der Pumpendrehzahl über eine Temperaturdifferenz lässt sich einfacher einstellen als ein Heizungssystem mit einer üblichen druckgeregelten Heizungspumpe.

## Beschreibung

Die Erfindung betrifft ein Verfahren zur Regelung eines Heizungssystems mit einem Wärmeerzeuger zum Aufheizen von Heizungswasser und einem eine Heizungspumpe sowie ein Heizungsventil aufweisenden Heizungswasser-Kreislauf, wobei die Umwälzung des Heizungswassers im Heizungswasser-Kreislauf über die Steuerung der Leistung der Heizungspumpe erfolgt.

Zur Vermeidung von Pfeifgeräuschen im Heizungssystem, zur Verhinderung des Ueberheizens einzelner Räume sowie zur Einsparung von elektrischer Energie ist es bekannt, Heizungspumpen aufgrund des gewünschten Druckes zu regeln. Wird ein Heizkörper zugedreht, drosselt die Heizungspumpe ihre Leistung. Da in einem Heizungssystem aus verschiedenen Gründen ein Druckverlust eintreten kann, ist ein Heizungssystem mit druckgeregelter Heizungspumpe nicht einfach einzustellen.

Angesichts dieser Gegebenheiten hat sich der Erfinder die Aufgabe gestellt, ein Verfahren der eingangs genannten Art zu schaffen, welches eine einfache Einstellung eines Heizungssystems mit leistungsgesteuerter Heizungspumpe ermöglicht und sich mit einfachen Mitteln durchführen lässt.

Zur erfindungsgemässen Lösung der Aufgabe führt, dass die Leistung der Heizungspumpe und damit die Durchflussmenge des Heizungswassers im Heizungswasser-Kreislauf über die Temperaturdifferenz zwischen der Vorlauftemperatur (T_{V}) und der Rücklauftemperatur (T_{R}) im Heizungswasser-Kreislauf gesteuert wird.

Die Durchflussmenge des Heizungswassers im Heizungssystem wird dem Energiebezug angepasst und hierzu als Ausgangsgrösse die Temperaturdifferenz zwischen Heizungsvor- und -rücklauf verwendet. Sobald an einem Verbraucher eine Verminderung des Energiebezugs eintritt, wird durch die Temperaturdifferenz-Steuerung die Durchflussmenge des Heizungswassers über die Drosselung der elektrischen Pumpenleistung reduziert. Daraus ergibt sich unmittelbar eine Reduktion des Verbrauchs an elektrischer Energie und das Ueberheizen der Räume sowie Pfeifgeräusche in Ventilen können verhindert werden.

Da sich Heizungswasser bei schnellem Durchlauf durch eine Heizung weniger rasch abkühlt, kann mit der erfindungsgemässen Regelung der Leistung der Heizungspumpe über die Temperaturdifferenz Vorlauf-Rücklauf auf einfache Weise verglichen werden, ob der Durchfluss mit dem Solldurchfluss übereinstimmt.

Das erfindungsgemässe Verfahren bietet gegenüber einer Druckregelung den Vorteil, dass kostengünstigere Sensoren und Pumpen eingesetzt werden können und ausser Temperaturmessungen die Erfassung anderer Parameter, z.B. der Druckdifferenz, entfallen. Da die als Steuerparameter verwendeten Temperaturen im Gegensatz zum Druckverlust eines Heizungssystems meistens bekannt sind, ist ein nach dem erfindungsgemässen Verfahren betriebenes Heizungssystem leichter einzustellen.

Das Haupteinsatzgebiet erfindungsgemäss geregelter Heizungspumpen wird in Häusern gesehen.

Im Steuergerät ist bevorzugt eine intelligente Heizungsregelung integriert, die nicht nur den Soll-Vorlauf, sondern auch den Soll-Rücklauf berechnet. Die Berechnung von Soll-Vor- und Soll-Rücklauf erfolgt aufgrund der Aussentemperatur und ggf. weiterer Temperaturen wie Innentemperatur und Nachtabsenkung.

Zweckmässigerweise wird die Vorlauftemperatur über das Heizungsventil oder einen gleitend gesteuerten Wärmeerzeuger und die Rücklauftemperatur über die Durchflussmenge an der Heizungspumpe geregelt. Wenn die Durchflussmenge erhöht wird, hat das Wasser weniger Zeit, sich abzukühlen; wenn die Durchflussmenge erniedrigt wird, kühlt sich das Wasser mehr ab.

Die Steuerung der Durchflussmenge des Heizungswassers erfolgt bevorzugt über eine in der Drehzahl variable Heizungspumpe. Besonders bevorzugt ist dabei eine Asynchron-Spaltrohrpumpe, wobei die Drehzahlregelung mittels Phasenanschnittsteuerung erfolgt. Hierbei wird die Drehzahl vorteilhafterweise einer Steuereinheit auf Mikroprozessorbasis vorgegeben.

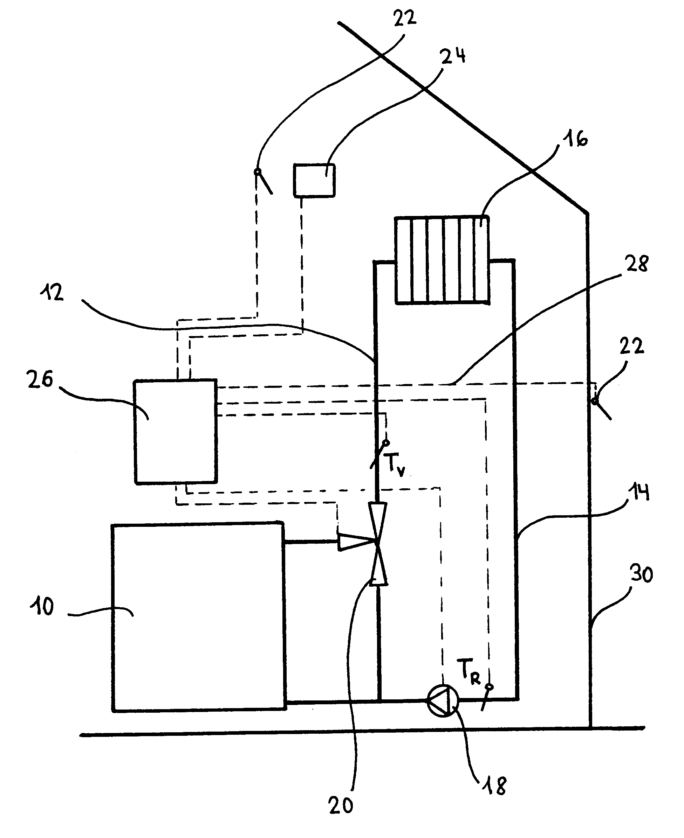

Weitere Vorteile, Merkmale und Einzelheiten der Erfindung ergeben sich aus der nachfolgenden Beschreibung eines mit dem erfindungsgemässen Verfahren regelbaren beispielhaften Heizungssystems sowie anhand der Zeichnung; diese zeigt in ihrer einzigen Figur ein Heizungssystem in schematischer Darstellung.

Ein Heizungssystem weist einen Heizungskessel 10 zum Aufheizen von Heizungswasser auf. Das aufgeheizte Heizungswasser wird einer Vorlaufleitung 12 zugeführt, durchläuft einen Raumheizkörper 16 und wird über eine Rücklaufleitung 14 wiederum zum Heizungskessel 10 zurückgeführt. Ueber eine Asynchron-Spaltrohrpumpe 18 in der Rücklaufleitung 14 wird das Heizungswasser im Heizungswasser-Kreislauf umgewälzt. Beim Uebergang vom Heizungskessel 10 in die Vorlaufleitung 12 ist ein Heizungsventil 20 zur kontrollierten Beimischung von heissem Heizungswasser in den Heizungswasser-Kreislauf angeordnet.

In der Vorlaufleitung 12 sowie in der Rücklaufleitung 14 wird die Vorlauftemperatur T_{V} bzw. die Rücklauftemperatur T_{R} des Heizungswasser über Temperaturfühler 22 gemessen. Weitere Temperaturfühler 22 befinden sich ausserhalb eines Gebäudes 30 zur Messung der Aussentemperatur sowie innerhalb des Gebäudes 30 zur Messung der Innentemperatur. Mit einem Raumregelgerät 24 kann die Raumtemperatur vorgegeben und beispielsweise eine Nachtabsenkung veranlasst werden. Ueber elektrische Verbindungen 28 sind die Heizungspumpe 18, das Heizungsventil 20, die Temperaturmessfühler 22 sowie das Raumregelgerät 24 an ein computergesteuertes Mess- und Regelsystem 26 zur Steuerung der gesamten Heizungsanlage angeschlossen.

In Abhängigkeit von der gewünschten und über das programmierte Steuergerät 26 vorgegebenen Raumtemperatur wird die Temperatur und die Umwälzung des Heizungswassers im Heizungswasser-Kreislauf geregelt.

Die Umwälzung des Heizungswassers im Heizungswasser-Kreislauf bzw. die Durchflussmenge des Heizungswassers durch die Heizungspumpe 18 wird über die Temperaturdifferenz zwischen der Vorlauftemperatur T_{V} und der Rücklauftemperatur T_{R} geregelt. Die Steuerung der Temperatur im Heizungswasser-Kreislauf erfolgt über das Heizungsventil 20.

## Patentansprüche

1. Verfahren zur Regelung eines Heizungssystems mit einem Wärmeerzeuger (10) zum Aufheizen von Heizungswasser und einem eine Heizungspumpe (18) sowie ein Heizungsventil (20) aufweisenden Heizungswasser-Kreislauf (12,14), wobei die Umwälzung des Heizungswassers im Heizungswasser-Kreislauf (12,14) über die Steuerung der Leistung der Heizungspumpe (18) erfolgt,
dadurch gekennzeichnet**,**
dass die Leistung der Heizungspumpe (18) und damit die Durchflussmenge des Heizungswassers im Heizungswasser-Kreislauf (12,14) über die Temperaturdifferenz zwischen der Vorlauftemperatur (T_{V}) und der Rücklauftemperatur (T_{R}) im Heizungswasser-Kreislauf (12,14) gesteuert wird.

2. Verfahren nach Anspruch 1, dadurch gekennzeichnet, dass zur Steuerung der Leistung der Heizungspumpe (18) der Soll-Vorlauf und der Soll-Rücklauf berechnet wird.

3. Verfahren nach Anspruch 2, dadurch gekennzeichnet, dass Soll-Vorlauf und Soll-Rücklauf aufgrund der Aussentemperatur und ggf. weiterer Temperaturen wie Innentemperatur und Nachtabsenkung berechnet wird.

4. Verfahren nach einem der Ansprüche 1 bis 3, dadurch gekennzeichnet, dass die Vorlauftemperatur (T_{V}) über das Heizungsventil (20) oder einen gleitend gesteuerten Wärmeerzeuger (10) geregelt wird.

5. Verfahren nach einem der Ansprüche 1 bis 4, dadurch gekennzeichnet, dass die Rücklauftemperatur (T_{R}) über die Durchflussmenge an der Heizungspumpe (18) geregelt wird.

6. Verfahren nach einem der Ansprüche 1 bis 5, dadurch gekennzeichnet, dass die Durchflussmenge über eine in der Drehzahl variable Heizungspumpe (18) gesteuert wird.

7. Verfahren nach Anspruch 6, dadurch gekennzeichnet, dass die Drehzahlregelung einer Ansynchron-Spaltrohrpumpe (18) mittels Phasenanschnittsteuerung erfolgt.

8. Verfahren nach Anspruch 6 oder 7, dadurch gekennzeichnet, dass die Drehzahl einer Steuereinheit auf Mikroprozessorbasis vorgegeben wird.
